# FASCICULE DE BREVET EUROPEEN

(11) **EP 0 957 442 B1**
(45) Date de publication et mention de la délivrance du brevet: **23.01.2002**
(21) Numéro de dépôt: 98110798.0
(22) Date de dépôt: 12.06.1998
(51) Int. Cl.: G06K 7/00

(54) **Système d'identification électronique d'une pluralité de transpondeurs**
Elektronisches Identifizierungssystem für mehrere Transponder
Electronic identification system of a plurality of transponders

(30) Priorité: 15.05.1998 CH 108698
(43) Date de publication de la demande: 17.11.1999
(73) Titulaire: EM Microelectronic-Marin SA, 2074 Marin (CH)
(72) Inventeur: Roz, Thierry, 2515 Prêles (CH)
(74) Mandataire: Ravenel, Thierry Gérard Louis

(56) Documents cités:
- EP-A- 0 494 114
- US-A- 4 471 345
- US-A- 5 686 902

## Description

La présente invention est relative à un système d'identification électronique sans contact ou système RFID. Ces systèmes, typiquement utilisés pour l'identification de personnes, d'animaux ou de biens (entre autre exemples: véhicules, articles nécessitant un marquage, sous-ensembles dans une chaîne de fabrication, etc.), comportent principalement un interrogateur/lecteur et un ou plusieurs transpondeurs associés chacun à un article devant être identifié.

Dans un tel système, l'interrogateur/lecteur est typiquement agencé pour émettre un signal d'interrogation sous la forme d'un rayonnement électromagnétique. Les transpondeurs soumis à ce champ électromagnétique d'interrogation répondent par la génération d'un signal de réponse consistant normalement en une modulation de ce champ, et fournissant généralement un code/adresse identifiant le transpondeur.

Dans tout système d'identification comportant une pluralité de transpondeurs, il existe potentiellement un risque que deux ou plusieurs transpondeurs interrogés génèrent simultanément leur signal de réponse, rendant ainsi leur identification impossible. De ce fait, de - manière à identifier chaque transpondeur individuellement et clairement, il est nécessaire de prévoir un protocole de communication, ou "protocole anti-collision", permettant de gérer efficacement ce type de conflits. Cette problématique a été adressée de diverses manières dans l'art antérieur.

Ainsi le brevet européen EP 0 494 114 décrit un tel système d'identification où chaque transpondeur est adapté pour répéter l'émission de son signal de réponse afin d'augmenter la probabilité d'une réception réussie de celui-ci par l'interrogateur. Les délais générés entre chaque émission du signal de réponse sont sensiblement plus longs que la durée du signal de réponse de manière à permettre l'identification d'un grand nombre de transpondeurs. Un signal d'inhibition temporaire est en outre transmis à chaque transpondeur correctement identifié de manière à écarter celui-ci du processus d'identification et diminuer ainsi les interférences avec les autres transpondeurs.

Un autre exemple d'un système d'identification où chaque transpondeur est adapté pour répéter l'émission de son signal de réponse est décrit dans le brevet US 4,471,345.

La solution décrite dans le brevet européen EP 0 494 114 s'avère particulièrement adaptée à la reconnaissance de multiples transpondeurs mais elle se révèle toutefois moins efficace en termes de temps de transaction pour de faibles quantités de transpondeurs. Par "temps de transaction" on entend le temps global nécessaire à l'achèvement du processus de communication exécuté, par exemple l'identification de chaque transpondeur interrogé. En outre, du fait que les signaux de réponse sont émis à des intervalles de temps aléatoires, c'est-à-dire de manière non synchrone les uns par rapport aux autres, il est nécessaire que l'interrogateur/lecteur se synchronise sur chaque signal de réponse reçu.

D'autres procédés d'identification sont basés sur le développement d'une arborescence en interrogeant systématiquement chaque transpondeur selon son code d'identification unique. Dans le brevet US 5,489,908, par exemple, il est ainsi proposé de procéder à l'émission d'un signal d'interrogation comprenant une séquence de bits destinée à être comparée par chaque transpondeur avec les bits les moins significatifs du code d'identification unique stocké dans sa mémoire. Les transpondeurs dont les codes d'identification ne comprennent pas cette séquence de bits suspendent ainsi l'émission de leur signal de réponse. La séquence de bits est alors adaptée jusqu'à ce qu'un unique transpondeur réponde à l'interrogation.

Ce procédé d'identification est efficace, car systématique, mais se révèle bien évidemment également grand consommateur en termes temps de transaction. Il est également manifeste que deux transpondeurs possédant des codes d'identification identiques ne peuvent être identifiés séparément.

Le brevet US 5,539,394 décrit un système d'identification présentant une architecture de division et de multiplexage temporel. Dans ce brevet, le signal d'interrogation est ainsi utilisé pour engendrer l'ouverture d'un ensemble de fenêtres de réponse sur lequel le lecteur et les différents transpondeurs interrogés se synchronisent. Un algorithme de répartition est utilisé par chaque transpondeur afin de déterminer la fenêtre de réponse durant laquelle il émettra son signal de réponse. Pour ce faire, l'algorithme de répartition se base sur un paramètre de distribution (équivalent au nombre de fenêtres de réponse) ainsi que sur l'information caractéristique de chaque transpondeur, c',est-à-dire son code d'identification unique et/ou tout autre information stockée dans sa mémoire.

Sur réception d'un signal de réponse émanant d'un unique transpondeur, le lecteur émet en outre un signal d'inhibition temporaire écartant le transpondeur identifié de la suite des opérations. Une collision apparaît si plusieurs transpondeurs émettent leur signal de réponse durant la même fenêtre de réponse. De ce fait, le cycle d'interrogation est ré-initialisé sur la base d'un nouveau paramètre de distribution, résultant en une allocation différente des fenêtres de réponse. Ce processus est ainsi répété jusqu'à ce que chaque transpondeur soit identifié individuellement.

Dans un mode de réalisation présenté dans ce brevet US 5,539,394, l'algorithme de répartition consiste à diviser le code d'identification du transpondeur par un diviseur (le paramètre de distribution) de manière à produire un reste correspondant à la fenêtre de réponse dans laquelle le transpondeur émettra son signal de réponse. Le paramètre de distribution utilisé comme diviseur équivaut au nombre de fenêtres de réponse utilisées. Il s'en suit qu'il n'est ainsi pas possible d'identifier individuellement des transpondeurs dont le code d'identification est identique, car ceux-ci sélectionneront invariablement la même fenêtre de réponse quelque soit le paramètre de distribution utilisé.

De plus, en termes de temps de transaction, seules les fenêtres de réponse durant lesquelles un signal de réponse unique est émis sont utilisées de manière optimale. Les fenêtres durant lesquelles aucun signal de réponse n'est transmis, ou durant lesquelles une collision apparaît, génèrent des attentes qui rallongent le temps de transaction total dans des proportions substantielles. Il s'avère en effet que le temps de transaction total constitue un élément critique lorsque l'on recherche à identifier un ensemble de transpondeurs dans les délais les plus courts possibles.

Le brevet US 5,686,902 décrit un système d'identification d'une pluralité de transpondeurs utilisant à la fois un algorithme de répartition déterministe, c'est-à-dire un algorithme basé sur le code d'identification de chaque transpondeur, et un algorithme de répartition aléatoire pour sélectionner la période durant laquelle chaque transpondeur émet son signal de réponse. Toutefois, les transpondeurs sont interrogés par lots par l'unité de lecture durant des périodes de durée déterminée. Il en résulte que le temps de transaction nécessaire à l'identification de tous les transpondeurs n'est pas utilisé au mieux.

Un but de la présente invention est de proposer un système d'identification dont le temps de transaction nécessaire à l'identification des transpondeurs est optimisé au mieux.

Un autre but de la présente invention est ainsi de proposer un système d'identification permettant de gérer la problématique liée à l'identification de multiples transpondeurs ayant potentiellement des codes d'identification identiques.

Pour répondre à ces buts de l'invention, la présente invention a pour objet un procédé d'identification d'une pluralité de transpondeurs se trouvant dans un volume de communication défini par un champ électromagnétique émanant d'une unité de lecture, le procédé comprenant les étapes suivantes:
a) émission dudit champ électromagnétique permettant la mise en éveil desdits transpondeurs se trouvant dans ledit volume de communication;
b) émission par ladite unité de lecture d'un signal d'interrogation permettant la synchronisation desdits transpondeurs et initialisant l'ouverture d'un ensemble de fenêtres de réponse destinées à la réception de signaux de réponse émanant desdits transpondeurs, chacun desdits transpondeurs comprenant des moyens pour sélectionner une fenêtre de réponse, parmi ledit ensemble des fenêtres de réponse, durant laquelle ce transpondeur émet alors son signal de réponse;
c) surveillance séquentielle des fenêtres de réponse afin d'en déterminer les états d'occupation, notamment une non-utilisation ou une réception sans collision d'un signal de réponse;
d) émission d'un signal d'inhibition permettant la suspension, au moins temporairement, de l'activité d'un transpondeur dont ledit signal de réponse est reçu sans collision;
e) répétition des étapes b) à d) jusqu'à ce que les signaux de réponse de ladite pluralité de transpondeurs soient détectés sans collision lors de l'étape c),
ce procédé d'identification étant caractérisé en ce que le temps global de transaction nécessaire à l'identification de chacun desdits transpondeurs est optimisé par des moyens de diminution de la durée de fenêtres de réponse non-utilisées.

Il résulte de ces caractéristiques que le procédé d'identification permet une optimisation du temps de transaction global nécessaire à l'identification des transpondeurs.

En effet, un avantage de la présente invention est de permettre de réduire le temps de transaction en diminuant la durée d'une fenêtre de réponse non utilisée, permettant de ce fait un gain très substantiel de temps.

Selon un mode de mise en oeuvre particulier, le procédé selon l'invention est en outre agencé pour diminuer la durée d'une fenêtre de réponse durant laquelle une collision de plusieurs messages d'identification est détectée.

Selon un autre mode de mise en oeuvre de l'invention, les moyens pour sélectionner une fenêtre de réponse comprennent des moyens de sélection aléatoire qui, à chaque nouveau signal d'interrogation, déterminent de manière aléatoire une fenêtre de réponse quelconque parmi l'ensemble de fenêtres de réponse.

Il résulte des caractéristiques de ce mode de mise en oeuvre que le procédé d'identification permet une réduction du taux de collision entre les différents messages d'identification émanant des transpondeurs interrogés.

En effet, un avantage de ce mode de mise en oeuvre est de permettre à chaque transpondeur de choisir aléatoirement une fenêtre de réponse parmi un ensemble ordonné de fenêtres de réponse. La probabilité de collision est ainsi dépendante du nombre de fenêtres de réponses allouées et du nombre de transpondeurs interrogés et non plus de l'information contenue dans chaque transpondeur comme ceci est le cas dans le document US 5,539,394 cité dans l'exposé de l'art antérieur.

D'autres caractéristiques et avantages de l'invention apparaîtront au cours de la description qui va suivre, donnée uniquement à titre d'exemple et faite en se référant aux dessins annexés sur lesquels :
- la figure 1 présente schématiquement le principe d'interrogation d'une pluralité de transpondeurs soumis au champ électromagnétique d'interrogation émanant de l'unité de lecture;
- la figure 2 montre un schéma bloc simplifié d'une unité de lecture selon l'invention;
- la figure 3a montre un schéma bloc simplifié d'un transpondeur selon l'invention;
- la figure 3b présente un schéma bloc simplifié de moyens permettant la sélection aléatoire d'une fenêtre de réponse selon l'invention;
- la figure 4 illustre le principe d'allocation des fenêtres de réponse selon la présente invention;
- les figures 5 et 6 sont des organigrammes décrivant le déroulement des opérations du point de vue de l'unité de lecture et du transpondeur respectivement pour un mode de réalisation préféré de l'invention;
- les figures 7a et 7b présentent un scénario possible illustrant le mode de réalisation exposé aux figures 5 et 6, où quatre transpondeurs sont interrogés par l'unité de lecture.

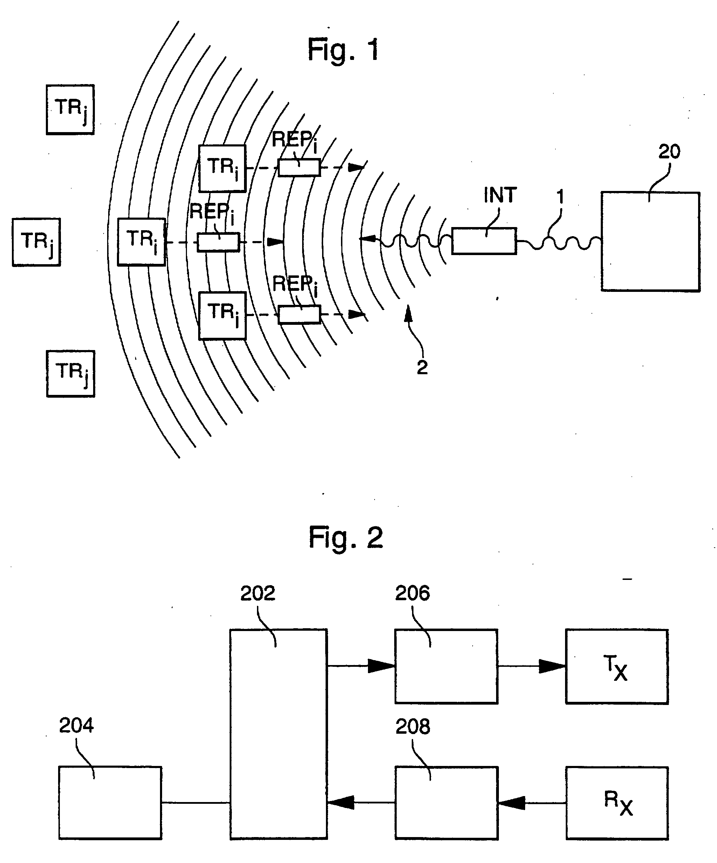

La figure 1 présente schématiquement le principe d'interrogation de plusieurs transpondeurs TRᵢ soumis à un champ électromagnétique 1 émis par une unité de lecture 20. Le champ électromagnétique 1 définit un volume de communication 2 dans lequel sont englobés les transpondeurs TRᵢ. Le volume de communication 2 représente la zone dans laquelle les transpondeurs TRᵢ peuvent capter une partie substantielle du champ électromagnétique 1 leur permettant d'entrer en fonction. Les transpondeurs TRᵢ sont ainsi mis en éveil sous l'action du champ électromagnétique 1. Les transpondeurs TRⱼ se trouvant à l'extérieur du volume de communication 2 ne sont pas activés et ne participent de ce fait pas au dialogue avec l'unité de lecture 20.

D'une manière générale, l'unité de lecture 20 a la possibilité d'interroger les transpondeurs TRᵢ mis en éveil en émettant un signal d'interrogation INT consistant typiquement en une modulation du champ électromagnétique 1. Ce signal d'interrogation INT indique aux transpondeurs TRᵢ que l'unité de lecture 20 désire recevoir un signal de réponse REPᵢ comprenant l'information requise, typiquement un code d'identification du transpondeur.

Selon la présente invention, le signal d'interrogation INT comporte en particulier une séquence permettant la synchronisation de tous les transpondeurs TRᵢ interrogés. Selon un mode de réalisation particulier de la présente invention, il est envisagé que le signal d'interrogation INT comprenne également un code souche, c'est-à-dire une séquence commune à une famille de transpondeurs, par exemple une partie de leurs codes d'identifications, de manière à permettre ainsi un tri préliminaire des transpondeurs mis en éveil. Ceci peut s'avérer particulièrement utile afin de restreindre la communication à une famille particulière de transpondeurs, par exemple une famille de clés permettant l'ouverture d'un véhicule, ou un ensemble d'articles appartenant à une classe de produits définie.

La figure 2 présente un schéma bloc simplifié d'une unité de lecture 20 selon la présente invention. Celle-ci comporte ainsi typiquement des moyens d'émission Tx et de réception Rx permettant respectivement l'émission du signal d'interrogation INT et la réception des signaux de réponse REPᵢ émanant des transpondeurs TRᵢ interrogés. Des moyens de modulation 206 et de démodulation 208 permettent respectivement l'encodage des signaux transmis et le décodage des signaux reçus. L'unité de lecture 20 comprend en outre des moyens de traitement 202 gérant le déroulement du processus de communication, ces moyens de traitements 202 étant couplés à des moyens de mémorisation 204, typiquement une mémoire reprogrammable (par exemple une EEPROM), permettant la mémorisation de l'information reçue des transpondeurs TRᵢ ou toute autre information nécessaire au déroulement du processus de communication.

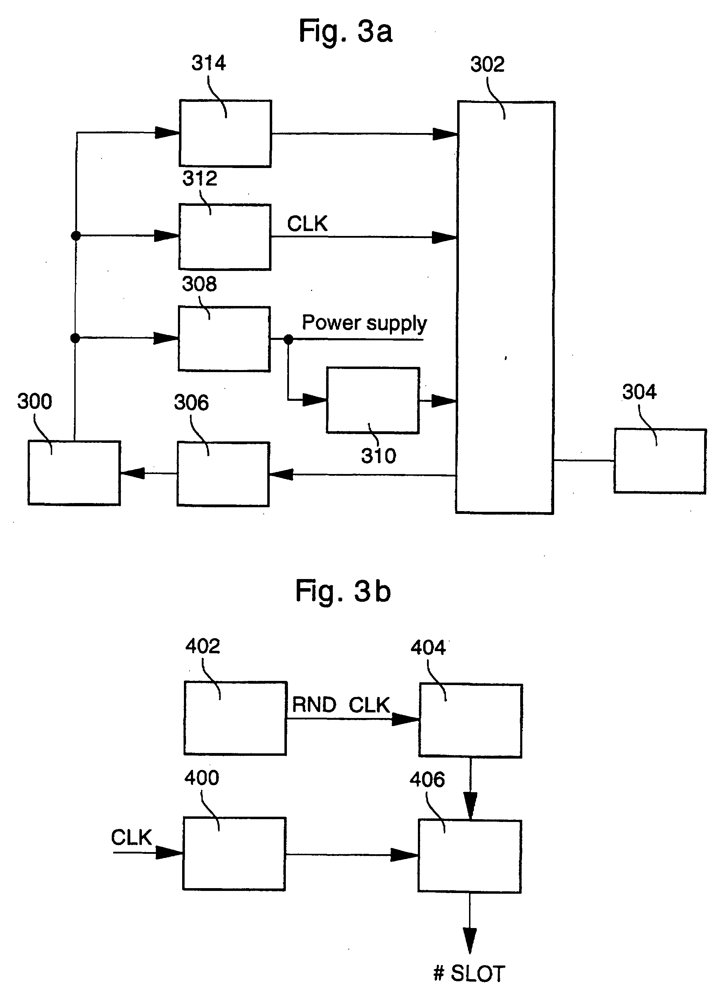

La figure 3a présente un schéma bloc simplifié d'un transpondeur TRᵢ selon la présente invention. Celui-ci comporte un circuit résonant 300 formé typiquement d'une inductance et d'une capacité (non représentées sur la figure) connectées en parallèle. Un modulateur 306 permet l'encodage de l'information à transmettre, par exemple le code d'identification du transpondeur, par commutation de charge du circuit résonant 300. Le modulateur 306 est commandé par une logique de contrôle 302 couplée à des moyens de mémorisation 304. Ces moyens de mémorisation 304, typiquement une EEPROM (ou autres types de mémoires reprogrammables), contiennent un code/adresse du transpondeur et/ou toute autre information enregistrée à la fabrication ou ultérieurement.

Le transpondeur TRᵢ comporte en outre des moyens d'extraction d'horloge 312 fournissant à la logique de contrôle 302 un signal d'horloge CLK dérivé de la fréquence du champ électromagnétique 1 émis par l'unité de lecture 20. L'encodage de l'information est ainsi effectué de manière synchrone pour chaque transpondeur.

Le transpondeur TRᵢ comporte en outre préférablement des moyens de détection 314, typiquement un monostable, permettant la détection de courtes interruptions du champ électromagnétique 1. Ces moyens de détection 314 permettent, en particulier, la détection d'interruptions du champ électromagnétique 1 générées par l'unité de lecture 20 et destinées à transmettre au transpondeur TRᵢ un ordre lui notifiant de modifier son état de communication, par exemple lui indiquant de suspendre son activité.

On préférera également utiliser des transpondeurs de type passif, c'est-à-dire des transpondeurs dont l'alimentation est extraite du champ électromagnétique ambiant, en l'occurrence le champ électromagnétique 1 émis par l'unité de lecture 20. Pour ce faire, l'énergie nécessaire au fonctionnement du transpondeur TRᵢ est extraite du champ électromagnétique 1 par le biais du circuit résonant 300 puis est redressée par un redresseur 308. Un circuit d'initialisation 310 permet d'initialiser la logique de contrôle 302 lorsque l'alimentation est suffisante pour garantir le bon fonctionnement opératoire du transpondeur. Il est à noter que l'utilisation de transpondeurs de type passif n'est pas essentielle à la présente invention, des transpondeurs de type actif pouvant aisément y être substitués.

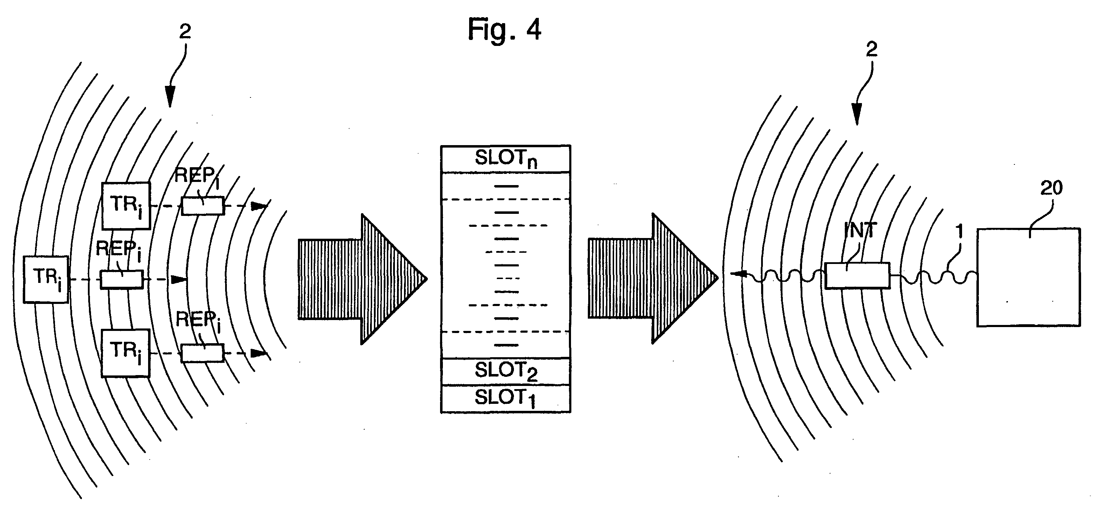

En se référant maintenant aux figures 3b et 4, on décrira ci-après le principe général de fonctionnement du système d'identification selon la présente invention et plus particulièrement le principe de sélection aléatoire d'une fenêtre de réponse. Ainsi, conformément à ce qui est schématisé dans la figure 4, à la suite de l'émission du signal d'interrogation INT par l'unité de lecture 20, un ensemble de n fenêtres SLOTₖ (k=1 à n) est généré. Chaque transpondeur TRᵢ comprend des moyens pour sélectionner, selon un processus aléatoire, une fenêtre de réponse particulière parmi l'ensemble des n fenêtres de réponses SLOTₖ disponibles durant laquelle il émettra son signal de réponse REPᵢ.

Le processus de sélection aléatoire d'une fenêtre de réponse est décrit ci-après plus en détail en se référant à la figure 3b. Cette figure présente un schéma bloc simplifié d'un exemple de moyens permettant la sélection aléatoire d'une fenêtre de réponse. Chaque transpondeur TRᵢ comporte ainsi préférablement un oscillateur RC 402 délivrant un signal d'horloge RND CLK à un compteur 404. Cet agencement comporte de plus une logique de chargement 400 permettant de charger la valeur instantanée du compteur 404 dans un registre 406, la valeur ainsi chargée dans le registre 406 étant représentative du numéro de la fenêtre de réponse dans laquelle le transpondeur émettra son signal de réponse comme cela est expliqué ci-après.

L'oscillateur RC 402 comporte des éléments de faible tolérance et de grande sensibilité à la température et aux conditions de fonctionnement. Ces caractéristiques conduisent ainsi à de grandes disparités entre les oscillateurs RC 402 de chaque transpondeur TRᵢ. Ces divergences se traduisent en outre par une grande diversité des valeurs fournies à la sortie du compteur 404 pour chaque transpondeur.

Il est à noter que l'on préférera également choisir des oscillateurs RC 402 délivrant un signal d'horloge RND CLK dont la fréquence est sensiblement plus élevée que la fréquence du signal d'horloge CLK extrait du champ électromagnétique 1, ceci de manière à accentuer les divergences entre les valeurs représentatives du numéro de la fenêtre de réponse générées par le compteur 404 de chaque transpondeur TRᵢ.

Dès la mise en éveil du transpondeur, l'oscillateur RC 402 délivre ainsi le signal d'horloge RND CLK, incrémentant le compteur 404. Sur réception du signal d'interrogation INT, la logique de chargement 400 procède alors au chargement de la valeur instantanée du compteur dans le registre 406. Il est à noter que le compteur 404 génère continuellement des valeurs tant que le transpondeur est en éveil et quelles que soient les opérations en cours d'exécution. L'ordre de chargement émis par la logique de chargement 404 permet ainsi de figer dans le registre 406 la valeur instantanée du compteur 404.

On constatera que le processus de sélection aléatoire d'une fenêtre de réponse ne permet pas de s'affranchir totalement du problème de collision. Il sera donc nécessaire de réexécuter un nouveau cycle d'interrogation si un contentieux entre plusieurs signaux de réponse REPᵢ apparaît. De ce fait, le temps total de transaction nécessaire à l'identification de tous les transpondeurs TRᵢ interrogés dépendra du nombre total de cycles d'interrogation effectués.

Selon un deuxième aspect de l'invention, le procédé d'identification est préférablement agencé pour permettre l'optimisation du temps global de transaction nécessaire à l'identification de chacun des transpondeurs en gérant l'occupation des fenêtres de réponse SLOTₖ (k=1 à n). Trois cas de figure peuvent en effet se présenter au cours d'une fenêtre de réponse. Le premier cas de figure est caractérisé par une transmission sans collision d'un signal de réponse REP durant la fenêtre de réponse. Dans ce cas de figure, le transpondeur émettant le signal de réponse peut ainsi être identifié individuellement. Ce transpondeur est alors typiquement inhibé de manière temporaire afin de l'écarter d'un cycle d'interrogation ultérieur. Selon un mode de réalisation de la présente invention, l'unité de lecture 20 émet ainsi un signal d'inhibition MUTE permettant la suspension de l'activité des transpondeurs dont les signaux de réponse respectifs sont reçus sans collision.

Le deuxième cas de figure est caractérisé par l'absence de transmission d'un signal de réponse REP durant la fenêtre de réponse. Un gain important en terme de temps de transaction peut ainsi être réalisé par la diminution de la durée des fenêtres de réponses non-utilisées. Il est en effet possible de déterminer, déjà après une certaine période de la fenêtre de réponse, si celle-ci est utilisée ou non. Selon un mode de réalisation de l'invention, le temps global de transaction nécessaire à l'identification de chacun des transpondeurs est ainsi optimisé par des moyens de diminution de la durée des fenêtres de réponse non-utilisées.

Le troisième cas de figure pouvant se présenter est caractérisé par une transmission simultanée de deux ou plusieurs signaux de réponse au cours de la fenêtre de réponse. Dans ce cas de figure, il est également possible de déterminer, déjà après une certaine période de la fenêtre de réponse, si une collision apparaît car les données en cours de réception par l'unité de lecture sont altérées par la superposition de plusieurs signaux de réponse. Selon un mode de réalisation de la présente invention, le temps de transaction nécessaire à l'identification de chacun des transpondeurs est ainsi également optimisé par des moyens de diminution de la durée des fenêtres de réponse au cours desquelles une collision est détectée.

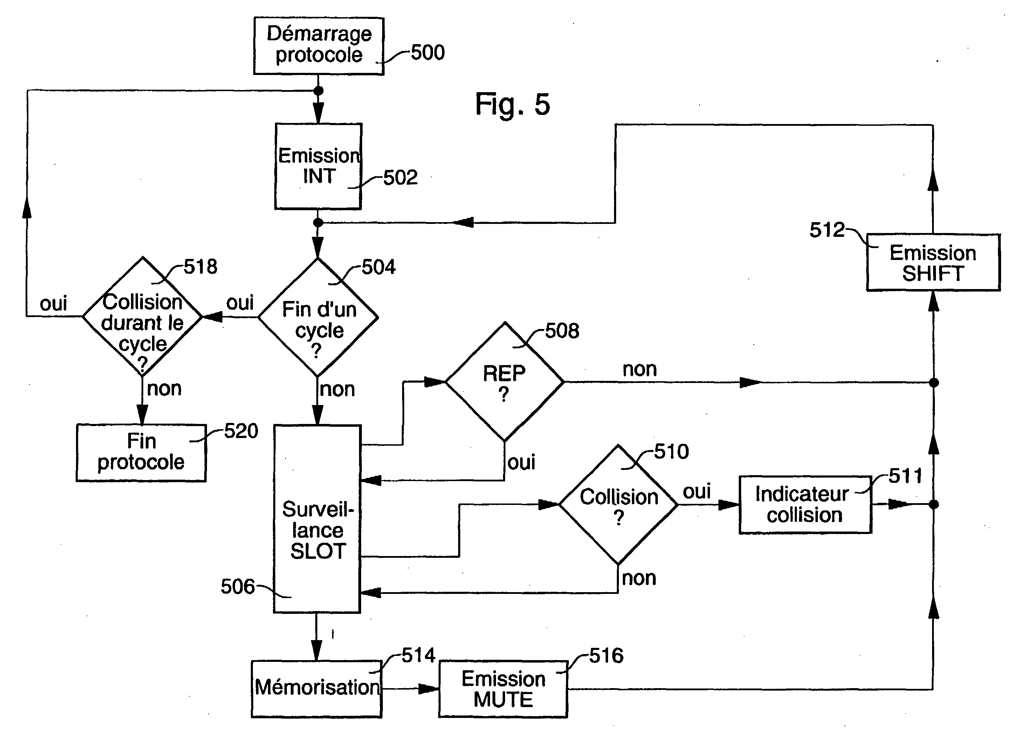

Un exemple de réalisation des moyens de diminution de la durée des fenêtres de réponse pour les cas de figure présentés ci-dessus sera décrit plus en détail dans la suite de la description en faisant référence aux figures 5 à 7. Il est en outre important de noter que l'optimisation du temps de transaction telle que présentée dans la présente description est applicable quel que soit le principe adopté de sélection (aléatoire ou déterministe) des fenêtres de réponse.

La figure 5 présente un organigramme décrivant le déroulement des opérations effectuée par l'unité de lecture 20 pour un mode de réalisation préféré. Le protocole de communication débute ainsi par l'émission du champ électromagnétique 1, représentée par le bloc 500. Le cycle d'interrogation est initialisé au bloc 502 par la transmission du signal d'interrogation INT. Ce signal permet la synchronisation des transpondeurs interrogés sur l'unité de lecture 20 et lance le processus de sélection aléatoire d'une fenêtre de réponse.

Comme cela est schématisé au bloc 504, il est tout d'abord vérifié si le cycle d'interrogation est arrivé à son terme. Dans l'affirmative, l'unité de lecture 20 procède au bloc de décision 518 comme nous y reviendrons ci-après. Dans la négative, l'unité de lecture 20 scrute alors la fenêtre de réponse SLOT en cours afin d'en vérifier l'état d'occupation. Durant cette opération, représentée au bloc 506, l'unité de lecture 20 teste si un signal de réponse REP est reçu après une certaine période de la fenêtre de réponse courante. Si tel est le cas, c'est-à-dire si une réponse positive est fournie à la sortie du bloc de décision 508, le processus poursuit son cours. Dans le cas contraire, l'unité de lecture 20 génère un signal de saut de fenêtre SHIFT, ce signal de saut de fenêtre SHIFT indiquant à tous les transpondeurs en activité le passage à la fenêtre de réponse SLOT suivante. Cette même opération, représentée au bloc 512, est exécutée si une collision est détectée, ceci se traduisant ainsi par une réponse positive à la sortie du bloc de décision 510 indiquant des collisions. Dans ce cas de figure, un indicateur spécifiant qu'une collision est apparue durant le cycle d'interrogation est activé au bloc 511 avant l'émission du signal de saut de fenêtre SHIFT. Dans le cas où aucune collision n'est détectée au bloc 510, le processus poursuit son cours comme indiqué.

Sur réception sans collisions d'un signal de réponse, l'information transmise par le transpondeur interrogé, typiquement son code d'identification, est mémorisée au bloc 514 dans la mémoire de l'unité de lecture 20. Cette information ainsi stockée permettra à l'unité de lecture 20 d'adresser ultérieurement le transpondeur concerné. Au bloc 516, l'unité de lecture 20 génère, en complément, un signal d'inhibition MUTE indiquant au transpondeur concerné qu'il a été identifié et qu'il peut, au moins temporairement, suspendre son activité. Suite à l'émission du signal d'inhibition MUTE, un signal de saut de fenêtre SHIFT est également émis afin d'indiquer le passage à la fenêtre de réponse SLOT suivante.

Chaque fenêtre de réponse est ainsi scrutée selon le déroulement présenté ci-dessus, jusqu'à ce que le bloc de décision 504 indique que le cycle d'interrogation est terminé. Si une collision a été détectée lors de l'une des fenêtre de réponse, en d'autre termes, si l'indicateur de collision a été activé au bloc 511, il sera nécessaire d'entreprendre un nouveau cycle d'interrogation. Le cycle d'interrogation est ainsi répété jusqu'au moment où le bloc de décision 518 n'indique plus aucune collision.

A la fin du protocole de communication, au bloc 520, il est alors possible d'adresser chaque transpondeur identifié individuellement sur la base de l'information mémorisée au bloc 514.

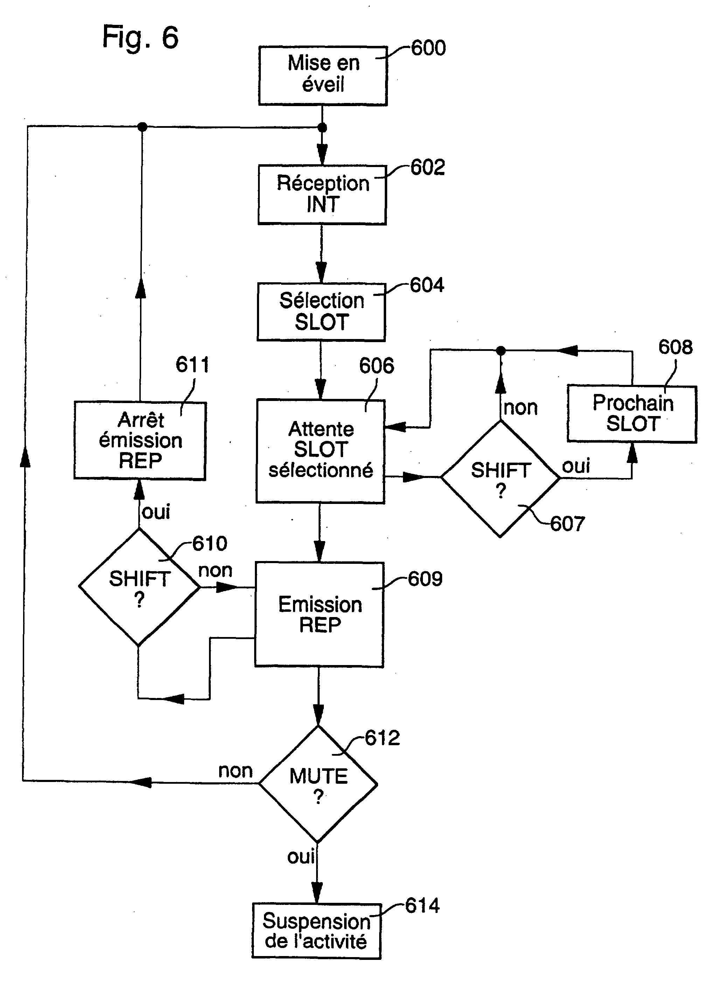

En se référant à la figure 6, on décrira maintenant le déroulement des opérations du point de vue d'un transpondeur TR pour le mode de réalisation préféré décrit plus haut en référence à la figure 5. Le transpondeur est mis en éveil, au bloc 600, sous l'action du champ électromagnétique 1 émis par l'unité de lecture 20. L'émission du signal d'interrogation INT est ensuite captée par le transpondeur au bloc 602. Ce signal d'interrogation INT définit une référence temporelle par rapport à laquelle le transpondeur est synchronisé.

Le processus aléatoire de sélection de la fenêtre de réponse SLOT est représenté au bloc suivant 604. Tel que décrit précédemment, cette sélection consiste à déterminer un numéro de fenêtre de réponse SLOT durant laquelle le transpondeur transmettra son signal de réponse REP.

Par la suite, comme ceci est indiqué au bloc 606, le transpondeur TR attend l'apparition de la fenêtre de réponse SLOT sélectionnée. Pour ce faire, le transpondeur TR dénombre les signaux de saut de fenêtre SHIFT transmis par l'unité de lecture 20 durant cette période jusqu'à l'apparition de la fenêtre de réponse SLOT sélectionnée. Ces opérations sont représentées aux blocs 607 et 608 respectivement.

Au cours de la fenêtre de réponse SLOT sélectionnée, au bloc 609, le transpondeur procède ainsi à l'émission du signal de réponse REP. Si, parallèlement à cette émission, le transpondeur détecte un signal de saut de fenêtre SHIFT lui indiquant que son signal de réponse est entré en collision, celui-ci suspend son émission, conformément à ce qui est indiqué par les blocs 610 et 611, et attend la réexécution d'un nouveau cycle d'interrogation au bloc 602.

Dans le cas où le signal de réponse a pu être transmis sans encombre, le transpondeur attend, au bloc 612, la réception d'un signal d'inhibition MUTE lui indiquant que celui-ci a été correctement identifié. Si ce signal est reçu, le transpondeur est temporairement inhibé, comme indiqué au bloc 614, afin de l'écarter de la population des transpondeurs interrogés. Dans le cas contraire, le transpondeur attend la réexécution d'un nouveau cycle d'interrogation au bloc 602.

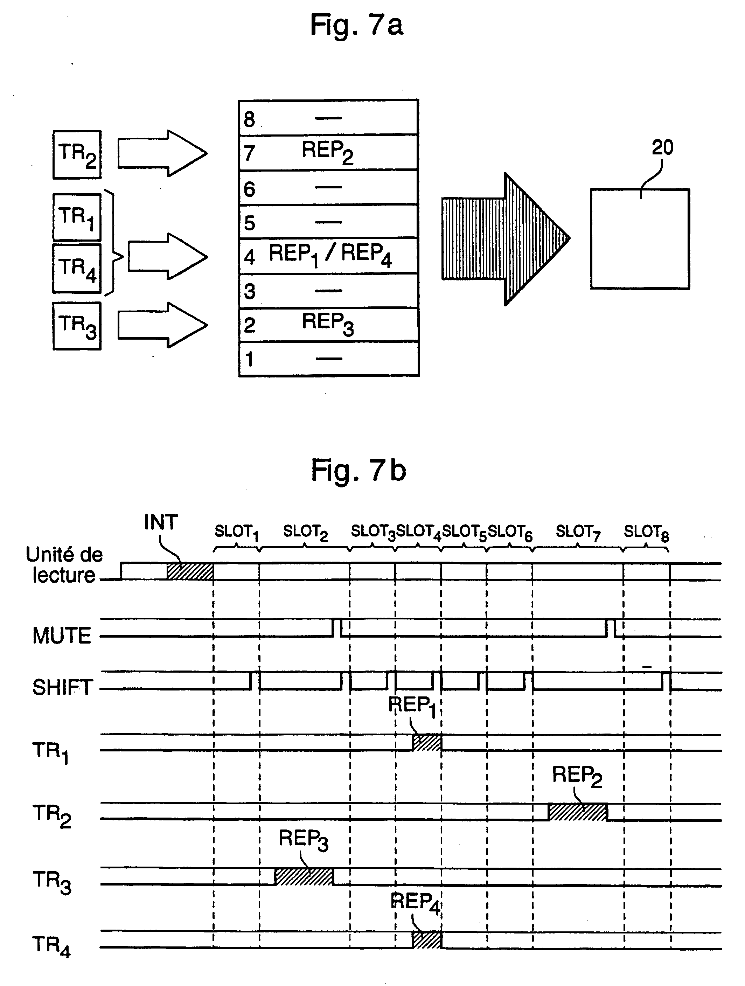

Les figure 7a et 7b présentent un scénario possible illustrant le mode de réalisation exposé aux figures 5 et 6, où quatre transpondeurs TR₁ à TR₄ sont mis en éveil sous l'action du champ électromagnétique 1 émis par l'unité de lecture 20. Suite à la génération du signal d'interrogation INT, l'unité de lecture 20 ouvre un ensemble de n fenêtres temporelles de réponse SLOTₖ, dans le cas présent 8 fenêtres de réponse référencées SLOT₁ à SLOT₈ ont été représentées à titre d'exemple. Chaque transpondeur TRᵢ (i=1,2,3,4) choisit aléatoirement une fenêtre de réponse durant laquelle il émet son signal de réponse REPᵢ (i=1,2,3,4). Dans l'exemple présenté dans les figures 7a et 7b, on a ainsi illustré la situation où les transpondeurs TR₁, TR₂, TR₃ et TR₄ ont choisi respectivement les fenêtres de réponse SLOT₄, SLOT₇, SLOT₂ et SLOT₄. On constate ainsi que les signaux de réponse REP₁ et REP₄ des transpondeurs TR₁ et TR₄ entrent en collision durant la fenêtre de réponse SLOT₄.

Les fenêtres de réponses SLOT₁, SLOT₃, SLOT₅, SLOT₆ et SLOT₈ n'étant utilisée par aucun des transpondeurs TRᵢ (i=1,2,3,4), un signal de saut de fenêtre SHIFT est ainsi généré après une certaine période de la fenêtre de réponse. Un signal de saut de fenêtre SHIFT est également généré durant la fenêtre de réponse SLOT₄ suite à la collision entre les signaux de réponse REP₁ et REP₄ des transpondeurs TR₁ et TR₄ respectivement, ce signal de saut de fenêtre SHIFT étant interprété par les transpondeurs TR₁ et TR₄ de telle sorte qu'ils suspendent l'émission des signaux de réponse REP₁ et REP₄.

Un signal d'inhibition MUTE est émis à l'encontre des transpondeurs TR₂ et TR₃ pour lesquels la réception a pu être effectuée sans collisions. Les transpondeurs TR₂ et TR₃ sont ainsi temporairement écartés de la population des transpondeurs interrogés. Ce signal d'inhibition MUTE est suivi d'un signal de saut de fenêtre SHIFT afin d'indiquer le passage à la fenêtre de réponse suivante.

Un deuxième cycle d'interrogation (non représenté) doit être réexécuté de manière à reconnaître les deux transpondeurs TR₁ et TR₄ restants. On comprendra ainsi que la probabilité qu'une collision apparaisse à nouveau lors du cycle de d'interrogation suivant est faible.

La figure 7b illustre le scénario décrit ci-dessus sous la forme de diagrammes temporels où sont respectivement représentés schématiquement les signaux de réponse REPᵢ émanant de chaque transpondeur TRᵢ (i=1,2,3,4), ainsi que les signaux MUTE et SHIFT émis par l'unité de lecture 20. Cette figure permet en outre de constater que la durée des fenêtres de réponse durant lesquelles aucun signal de réponse n'est transmis, ou durant lesquelles une collision est détectée est réduite par l'émission des signaux de saut de fenêtre SHIFT, ceci permettant ainsi une diminution substantielle de la durée du cycle d'interrogation.

Les signaux de saut de fenêtre SHIFT et d'inhibition temporaire MUTE sont préférablement formés d'une ou plusieurs interruptions momentanées du champ électromagnétique 1 émis par l'unité de lecture 20. A cet effet, les moyens de détection 314 associés à la logique de contrôle 302 (figure 3a) de chaque transpondeur sont utilisés pour surveiller si de telles interruptions caractéristiques d'un signal de saut SHIFT ou d'un signal d'inhibition MUTE sont générées par l'unité de lecture 20.

On notera que dans le mode de réalisation décrit ci-dessus en référence aux figures 5 à 7, un signal de saut de fenêtre SHIFT est émis de manière à indiquer le passage à la fenêtre de réponse suivante.-Chaque transpondeur dénombre les signaux de saut de fenêtre SHIFT transmis par l'unité de lecture jusqu'à l'apparition de la fenêtre de réponse sélectionnée. Il est ainsi possible de prolonger si nécessaire la durée d'une fenêtre de réponse, par exemple de manière à adresser un transpondeur dès que celui-ci à été identifié.

Alternativement, il est également proposé de fixer une durée déterminée pour chaque fenêtre de réponse, cette durée devant être suffisante pour permettre la transmission d'un signal de réponse. Dans un tel cas, un signal de saut de fenêtre n'est alors nécessaire que dans les cas de figure où la fenêtre de réponse n'est pas utilisée ou une collision est détectée. En outre, le signal de saut de fenêtre SHIFT peut être ainsi interprété par les transpondeurs en activité de telle sorte qu'ils avancent l'émission de leur signal de réponse d'une durée correspondant à la durée restante de la fenêtre de réponse.

On notera finalement que certaines applications ne requièrent pas nécessairement l'identification de la totalité des transpondeurs interrogés. Ainsi, par exemple, un système d'ouverture à distance pour véhicule auquel est associé un ensemble de transpondeurs (ou "clés") nécessite uniquement l'identification du premier transpondeur émettant son signal de réponse sans collision, et ceci dans un délai le plus court possible. Dans l'illustration de la figure 7a, ceci se traduirait ainsi par la fin du cycle d'interrogation sur réception du signal de réponse REP₃ émanant du transpondeur TR₃.

## Revendications

1. Procédé d'identification d'une pluralité de transpondeurs (TRᵢ) se trouvant dans un volume de communication (2) défini par un champ électromagnétique (1) émanant d'une unité de lecture (20), le procédé comprenant les étapes suivantes :
a) émission dudit champ électromagnétique (1) permettant la mise en éveil desdits transpondeurs (TRᵢ) se trouvant dans ledit volume de communication (2);
b) émission par ladite unité de lecture (20) d'un signal d'interrogation (INT) permettant la synchronisation desdits transpondeurs (TRᵢ) et initialisant l'ouverture d'un ensemble de fenêtres de réponse (SLOTₖ, k=1 à n) destinées à la réception de signaux de réponse (REPᵢ) émanant desdits transpondeurs (TRᵢ), chacun desdits transpondeurs (TRᵢ) comprenant des moyens pour sélectionner une fenêtre de réponse, parmi ledit ensemble des fenêtres de réponse (SLOTₖ, k=1 à n), durant laquelle ce transpondeur émet alors son signal de réponse;
c) surveillance séquentielle des fenêtres de réponse (SLOTₖ, k=1 à n) afin d'en déterminer les états d'occupation, notamment une non-utilisation ou une réception sans collision d'un signal de réponse (REPᵢ);
d) émission d'un signal d'inhibition (MUTE) permettant la suspension, au moins temporairement, de l'activité d'un transpondeur dont ledit signal de réponse (REPᵢ) est reçu sans collision;
e) répétition des étapes b) à d) jusqu'à ce que les signaux de réponse de ladite pluralité de transpondeurs soient détectés sans collision lors de l'étape c),
ce procédé d'identification étant **caractérisé en ce que** le temps global de transaction nécessaire à l'identification de chacun desdits transpondeurs (TRᵢ) est optimisé par des moyens de diminution de la durée de fenêtres de réponse non-utilisées.

2. Procédé d'identification selon la revendication 1 dans lequel ladite surveillance séquentielle des fenêtres de réponse (SLOTₖ, k=1 à n) est prévue pour détecter également une collision entre plusieurs signaux de réponse au sein d'une quelconque fenêtre de réponse, **caractérisé en ce que** le temps global de transaction nécessaire à l'identification de chacun desdits transpondeurs (TRᵢ) est en outre optimisé par des moyens de diminution de la durée de fenêtres de réponse au sein desquelles une collision entre plusieurs signaux de réponse (REPᵢ) est détectée.

3. Procédé d'identification selon la revendication 1, **caractérisé en** que lesdits moyens de diminution de la durée de fenêtres de réponse sont agencés pour générer un signal de saut de fenêtre (SHIFT) indiquant aux transpondeurs (TRᵢ) le passage à une fenêtre de réponse suivante (SLOTₖ, k=1 à n).

4. Procédé d'identification selon la revendication 3, **caractérisé en ce que** ledit signal de saut de fenêtre (SHIFT) se compose d'une ou plusieurs interruptions momentanées dudit champ électromagnétique (1).

5. Procédé d'identification selon la revendication 1, **caractérisé en ce que** lesdits moyens pour sélectionner une fenêtre de réponse comprennent des moyens de sélection aléatoire qui, à chaque nouveau signal d'interrogation (INT), déterminent de manière aléatoire une fenêtre de réponse quelconque parmi ledit ensemble de fenêtres de réponse (SLOTₖ, k=1 à n).

6. Procédé d'identification selon la revendication 5, **caractérisé en ce que** lesdits moyens de sélection aléatoire comprennent des moyens (402) permettant la génération d'un signal d'horloge aléatoire (RND CLK) pendant la durée de la mise en éveil du transpondeur, des moyens (404) permettant une incrémentation cyclique, sur la base dudit signal d'horloge aléatoire (RND CLK), d'une valeur représentative d'une fenêtre de réponse, des moyens (400, 406) permettant le chargement de cette valeur représentative de la fenêtre de réponse sélectionnée lors de l'émission dudit signal d'interrogation (INT).

7. Procédé d'identification selon la revendication 6, **caractérisé en ce que** la fréquence dudit signal d'horloge aléatoire (RND CLK) est sensiblement plus élevée que la fréquence d'un signal d'horloge utilisé pour le fonctionnement interne desdits transpondeurs (TRᵢ).

8. Procédé d'identification selon l'une quelconque des revendications 1 à 7, **caractérisé en ce que** ledit signal d'inhibition (MUTE) se compose d'une ou plusieurs interruptions momentanées dudit champ électromagnétique (1).

9. Procédé d'identification selon l'une quelconque des revendications 1 à 8, **caractérisé en ce que** ledit signal d'interrogation (INT) comprend en outre un code souche représentatif d'une famille déterminée de transpondeurs, ledit code souche permettant un tri préliminaire de tous les transpondeurs n'appartenant pas à ladite famille de transpondeurs.

10. Unité de lecture (20) permettant l'identification d'une pluralité de transpondeurs (TRᵢ) se trouvant dans un volume de communication (2) défini par un champ électromagnétique (1) émanant de ladite unité de lecture (20), ladite unité de lecture (20) comprenant des moyens d'émission (Tx) connectés à des moyens de modulation (206), des moyens de réception (Rx) connectés à des moyens de démodulation (208), des moyens de traitement et de contrôle (202) et des moyens de mémorisation (204), cette unité de lecture (20) étant agencée pour
a) mettre en éveil lesdits transpondeurs (TRᵢ) par l'émission dudit champ électromagnétique (1);
b) émettre un signal d'interrogation (INT) permettant la synchronisation desdits transpondeurs (TRᵢ) et initialisant l'ouverture d'un ensemble de fenêtres de réponse (SLOTₖ, k=1 à n) destinées à la réception de signaux de réponse (REPᵢ) émanant desdits transpondeurs (TRᵢ) ;
c) scruter séquentiellement chacune des fenêtres de réponse (SLOTₖ, k=1 à n) afin d'en déterminer les états d'occupation, notamment une non-utilisation ou une réception sans collision d'un signal de réponse (REPᵢ);
d) émettre un signal d'inhibition (MUTE) permettant la suspension, au moins temporairement, de l'activité d'un transpondeur dont ledit signal de réponse (REPᵢ) est reçu sans collision; et
e) répéter les étapes b) à d) jusqu'à ce que les signaux de réponse de ladite pluralité de transpondeurs soient détectés sans collision,
cette unité de lecture (20) étant **caractérisée en ce que** celle-ci est en outre agencée pour émettre un signal de saut de fenêtre (SHIFT) permettant une diminution de la durée d'une fenêtre de réponse lorsqu'aucun signal de réponse (REPᵢ) n'est reçu dans cette fenêtre de réponse.

11. Unité de lecture (20) selon la revendication 10, **caractérisée en ce que** celle-ci est en outre agencée pour émettre un signal de saut de fenêtre (SHIFT) permettant une diminution de la durée d'une fenêtre de réponse lorsqu'une collision entre plusieurs signaux de réponse (REPᵢ) est détectée dans cette fenêtre de réponse.

12. Transpondeur (TR) comprenant des moyens de communication (300, 306), des moyens de traitement et de contrôle (302), des moyens de mémorisation (304) et des moyens répondant à la réception d'un signal d'interrogation (INT) émanant d'une unité de lecture (20) et permettant de sélectionner une fenêtre de réponse, parmi un ensemble de fenêtres de réponse (SLOTₖ, k=1 à n), durant laquelle ce transpondeur émet un signal de réponse (REP), ce transpondeur étant agencé pour suspendre son activité, au moins temporairement, sur réception d'un signal d'inhibition (MUTE), ce transpondeur étant **caractérisé en ce qu'**il est en outre agencé pour passer à une fenêtre de réponse suivante sur réception d'un signal de saut de fenêtre (SHIFT) émanant de ladite unité de lecture (20), ce signal de saut de fenêtre (SHIFT) indiquant qu'une fenêtre de réponse n'est pas utilisée.

13. Transpondeur (TR) selon la revendication 12, **caractérisé en ce qu'**il est en outre agencé pour suspendre l'émission dudit signal de réponse (REP) sur réception du signal de saut de fenêtre (SHIFT), ledit signal de saut de fenêtre (SHIFT) indiquant que ledit signal de réponse (REP) est entré en collision avec un signal de réponse émanant d'un autre transpondeur.

14. Transpondeur (TR) selon la revendication 12, **caractérisé en ce que** lesdits moyens pour sélectionner une fenêtre de réponse comprennent des moyens de sélection aléatoire qui, à chaque nouveau signal d'interrogation (INT), déterminent de manière aléatoire une fenêtre de réponse quelconque parmi ledit ensemble de fenêtres de réponse (SLOTₖ, k=1 à n).

## Claims

1. Method for identifying a plurality of transponders (TRᵢ) located in a communication volume (2) defined by an electromagnetic field (1) emanating from a read unit (20), the method including the following steps:
(a) transmission of said electromagnetic field (1) allowing said transponders (TRᵢ) located in said communication volume (2) to be activated
(b) transmission via said read unit (20) of an interrogation signal (INT) allowing synchronisation of said transponders (TRᵢ) and initialising the opening of a set of response slots (SLOTₖ, k=1 to n) intended to receive response signals (REPᵢ) emanating from said transponders (TRᵢ), each of said transponders (TRᵢ) including means for selecting a response slot, from among said set of response slots (SLOTₖ, k=1 to n), during which the transponder transmits its response signal;
(c) sequential monitoring of the response slots (SLOTₖ, k=1 to n) in order to determine their states of occupation, in particular non-use of a response slot or reception without collision of a response signal (REPᵢ);
(d) transmission of an inhibition signal (MUTE) allowing suspension, at least temporarily, of the activity of a transponder whose said response signal (REPᵢ) is received without collision;
(e) repetition of steps b) to d) until the response signals of said plurality of transponders are detected without collision during step c),
this identification method being **characterized in that** the global transaction time necessary to identify each of said transponders (TRᵢ) is optimised by means for reducing the duration of unused response slots.

2. Identification method according to claim 1 wherein said sequential monitoring of the response slots (SLOTₖ, k=1 to n) is provided also to detect a collision between several response signals in any response slot, **characterized in that** the global transaction time necessary to identify each of said transponders (TRᵢ) is also optimised by means for reducing the duration of slots in which a collision between several response signals (REPᵢ) is detected.

3. Identification method according to claim 1, **characterized in that** said means for reducing the duration of response slots are arranged so as to generate a response slot shift signal (SHIFT) indicating to the transponder (TRᵢ) the passage to a following response slot (SLOTₖ, k=1 to n).

4. Identification method according to claim 3, **characterized in that** said response slot shift signal (SHIFT) consists of one or several momentary interruptions of said electromagnetic field (1).

5. Identification method according to claim 1, **characterized in that** said means for selecting a response slot include random selection means which, upon each new interrogation signal (INT), determine in a random manner any response slot from among said set of response slots (SLOTₖ, k=1 to n).

6. Identification method according to claim 5, **characterized in that** said random selection means (402) include means allowing a random clock signal (RND CLK) to be generated during the duration of the activation of the transponder, means (404) allowing a cyclic incrementation, on the basis of said random clock signal (RND CLK), of a value representative of a response slot, means (400, 406) allowing this value representative of the selected response slot to be loaded during transmission of said interrogation signal (INT).

7. Identification method according to claim 6, **characterized in that** the frequency of said random clock signal (RND CLK) is substantially higher than the frequency of a clock signal used for the internal operation of said transponders (TRᵢ).

8. Identification method according to any one of claims 1 to 7, **characterized in that** said inhibition signal (MUTE) consists of one or more momentary interruptions of said electromagnetic field (1).

9. Identification method according to any one of claims 1 to 8, **characterized in that** said interrogation signal (INT) further includes a root code representative of a determined family of transponders, said root code allowing preliminary filtering all the transponders not belonging to said family of transponders.

10. Read unit (20) allowing identification of a plurality of transponders (TRᵢ) located in a communication volume (2) defined by an electromagnetic field (1) emanating from said read unit (20), said read unit (20) including transmission means (Tx) connected to modulation means (206), reception means (Rx) connected to demodulation means (208), processing and checking means (202) and memory means (204), said read unit (20) being arranged to:
(a) activate said transponders (TRᵢ) by the transmission of said electromagnetic field (1);
(b) transmit an interrogation signal (INT) allowing synchronisation of said transponders (TRᵢ) and initialising the opening of a set of response slots (SLOTₖ k=1 to n) intended to receive response signals (REPᵢ) emanating from said transponders (TRᵢ);
(c) monitor sequentially each of the response slots (SLOTₖ k=1 to n) in order to determine their state of occupation, in particular non-use of a response slot or reception without collision of a response signal (REPᵢ);
(d) transmit an inhibition signal (MUTE) allowing suspension, at least temporarily, of the activity of a transponder whose said response signal (REPᵢ) is received without collision; and
(e) repeat steps b) to d) until the response signals of said plurality of transponders are detected without collision,
this read unit (20) being **characterized in that** it is further arranged to transmit a response slot shift signal (SHIFT) allowing reduction of the duration of a response slot when no response signal (REPᵢ) is received in said response slot.

11. Read unit (20) according to claim 10, **characterized in that** it is also arranged to transmit a response slot shift signal (SHIFT) allowing reduction of the duration of a response slot when a collision between several response signals (REPᵢ) is detected in said response slot.

12. Transponder (TR) including communication means (300, 306), processing and checking means (302), memory means (304) and means responding to the reception of an interrogation signal (INT) emanating from a read unit (20) and allowing a response slot to be selected, from a set of response slots (SLOTₖ k=1 to n), during which said transponder transmits a response signal (REP), said transponder being arranged to suspend its activity, at least temporarily upon reception of an inhibition signal (MUTE), said transponder being **characterized in that** it is further arranged to shift to a following response slot upon reception of response slot shift signal (SHIFT) emanating from said read unit (20), said response slot shift signal (SHIFT) indicating that a response slot is not used.

13. Transponder (TR) according to claim 12, **characterized in that** it is further arranged to suspend the transmission of said response signal (REP) upon reception of said response slot shift signal (SHIFT), said response slot shift signal (SHIFT) indicating that said response signal (REP) has collided with a response signal from another transponder.

14. Transponder (TR) according to claim 12, **characterized in that** said means for selecting response slot include random selection means which, upon each new interrogation signal (INT), determine in a random manner any response slot from among said set of response slots (SLOTₖ k=1 to n).

## Patentansprüche

1. Verfahren zum Identifizieren mehrerer Transponder (TRᵢ), die sich in einem Kommunikationsvolumen (2) befinden, das durch ein elektromagnetisches Feld (1) definiert ist, das von einer Leseeinheit (20) ausgeht, wobei das Verfahren die folgenden Schritte umfaßt:
a) Aussenden des elektromagnetischen Feldes (1), das das Aufwecken der Transponder (TRᵢ) ermöglicht, die sich in dem Kommunikationsvolumen (2) befinden;
b) Aussenden eines Abfragesignals (INT) durch die Leseeinheit (20), das die Synchronisation der Transponder (TRᵢ) ermöglicht und das Öffnen einer Gesamtheit von Antwortfenstern (SLOTₖ, k = 1 bis n) initialisiert, die für den Empfang von Antwortsignalen (REPᵢ), die von den Transpondern (TRᵢ) ausgehen, bestimmt sind, wobei jeder der Transponder (TRᵢ) Mittel zum Auswählen eines Antwortfensters aus der Gesamtheit von Antwortfenstern (SLOTₖ, k = 1 bis n), in dem dieser Transponder dann sein Antwortsignal aussendet, umfaßt;
c) sequentielles Überwachen der Antwortfenster (SLOTₖ, k = 1 bis n), um daraus die Belegungszustände, insbesondere eine Nichtverwendung oder einen Empfang ohne Kollision eines Antwortsignals (REPᵢ), zu bestimmen;
d) Aussenden eines Sperrsignals (MUTE), das die wenigstens vorübergehende Unterbrechung der Aktivität eines Transponders ermöglicht, dessen Antwortsignal (REPᵢ) ohne Kollision empfangen wird;
e) Wiederholen der Schritte b) bis d), bis die Antwortsignale der mehreren Transponder ohne Kollision im Schritt c) erfaßt sind,
wobei dieses Identifizierungsverfahren **dadurch gekennzeichnet ist, daß** die globale Transaktionszeit, die für die Identifizierung jedes der Transponder (TRᵢ) notwendig ist, durch Mittel zum Verringern der Dauer der nicht verwendeten Antwortfenster optimiert wird.

2. Identifizierungsverfahren nach Anspruch 1, bei dem die sequentielle Überwachung der Antwortfenster (SLOTₖ, k = 1 bis n) dazu vorgesehen ist, außerdem eine Kollision zwischen den mehreren Antwortsignalen innerhalb irgendeines Antwortfensters zu erfassen, **dadurch gekennzeichnet, daß** die globale Transaktionszeit, die für die Identifizierung jedes der Transponder (TRᵢ) notwendig ist, außerdem durch Mittel zum Verringern der Dauer von Antwortfenstern, in denen eine Kollision zwischen mehreren Antwortsignalen (REPᵢ) erfaßt wird, optimiert wird.

3. Identifizierungsverfahren nach Anspruch 1, **dadurch gekennzeichnet, daß** die Mittel zum Verringern der Dauer von Antwortfenstern so beschaffen sind, daß sie ein Fenster-Sprungsignal (SHIFT) erzeugen, das den Transpondern (TRᵢ) den Übergang zu einem folgenden Antwortfenster (SLOTₖ, k = 1 bis n) angibt.

4. Identifizierungsverfahren nach Anspruch 3, **dadurch gekennzeichnet, daß** das Fenster-Sprungsignal (SHIFT) aus einem oder mehreren momentanen Unterbrechungen des elektromagnetischen Feldes (1) aufgebaut ist.

5. Identifizierungsverfahren nach Anspruch 1, **dadurch gekennzeichnet, daß** die Mittel zum Auswählen eines Antwortfensters Mittel zum zufälligen Auswählen umfassen, die bei jedem neuen Abfragesignal INT) in zufälliger Weise ein beliebiges Antwortfenster aus der Gesamtheit von Antwortfenstern (SLOTₖ, k = 1 bis n) bestimmen.

6. Identifizierungsverfahren nach Anspruch 5, **dadurch gekennzeichnet, daß** die Mittel zum zufälligen Auswählen Mittel (402), die die Erzeugung eines zufälligen Taktsignals (RND CLK) während der Dauer des Aufweckens des Transponders ermöglichen, Mittel (404), die eine zyklische Inkrementierung eines ein Antwortfenster darstellenden Wertes auf der Grundlage des zufälligen Taktsignals (RND CLK) ermöglichen, und Mittel (400, 406), die das Laden dieses das ausgewählte Antwortfenster darstellenden Wertes beim Aussenden des Abfragesignals (INT) ermöglichen, umfassen.

7. Identifizierungsverfahren nach Anspruch 6, **dadurch gekennzeichnet, daß** die Frequenz des zufälligen Taktsignals (RND CLK) wesentlich höher als die Frequenz eines Taktsignals ist, das für den internen Betrieb der Transponder (TRᵢ) verwendet wird.

8. Identifizierungsverfahren nach einem der Ansprüche 1 bis 7, **dadurch gekennzeichnet, daß** das Sperrsignal (MUTE) aus einer oder mehreren momentanen Unterbrechungen des elektromagnetischen Feldes (1) aufgebaut ist.

9. Identifizierungsverfahren nach einem der Ansprüche 1 bis 8, **dadurch gekennzeichnet, daß** das Abfragesignal (INT) außerdem einen Stammcode umfaßt, der eine bestimmte Familie von Transpondern darstellt, wobei der Stammcode ein vorbereitendes Sortieren aller nicht zu der Familie von Transpondern gehörenden Transponder ermöglicht.

10. Leseeinheit (20), die die Identifizierung mehrerer Transponder (TRᵢ) ermöglicht, die sich in einem Kommunikationsvolumen (2) befinden, das durch ein elektromagnetisches Feld (1) definiert ist, das von der Leseeinheit (20) ausgeht, wobei die Leseeinheit (20) Sendemittel (Tx), die an Modulationsmittel (206) angeschlossen sind, Empfangsmittel (Rx), die an Demodulationsmittel (208) angeschlossen sind, Verarbeitungs- und Steuermittel (202) sowie Speichermittel (204) umfaßt, wobei diese Leseeinheit (20) so beschaffen ist, daß sie
a) die Transponder (TRᵢ) durch Aussenden des elektromagnetischen Feldes (1) aufweckt;
b) ein Abfragesignal (INT) aussendet, das die Synchronisation der Transponder (TRᵢ) und das Initialisieren des Öffnens einer Gesamtheit von Antwortfenstern (SLOTₖ, k = 1 bis n), die für den Empfang von von den Transpondern (TRᵢ) ausgehenden Antwortsignalen (REPᵢ) bestimmt sind, ermöglicht;
c) jedes der Antwortfenster (SLOTk, k = 1 bis n) sequentiell untersucht, um daraus die Belegungszustände, insbesondere eine Nichtverwendung oder einen Empfang ohne Kollision eines Antwortsignals (REPᵢ), zu bestimmen;
d) ein Sperrsignal (MUTE) aussendet, das die zumindest vorübergehende Unterbrechung der Aktivität eines Transponders ermöglicht, dessen Antwortsignal (REPᵢ) ohne Kollision empfangen wird; und
e) die Schritte b) bis d) wiederholt, bis die Antwortsignale der mehreren Transponder ohne Kollision erfaßt sind,
wobei diese Leseeinheit (20) **dadurch gekennzeichnet ist, daß** sie außerdem so beschaffen ist, daß sie ein Fenster-Sprungsignal (SHIFT) aussendet, das eine Verringerung der Dauer eines Antwortfensters ermöglicht, wenn in diesem Antwortfenster kein Antwortsignal (REPᵢ) empfangen wird.

11. Leseeinheit (20) nach Anspruch 10, **dadurch gekennzeichnet, daß** sie außerdem so beschaffen ist, daß sie ein Fenster-Sprungsignal (SHIFT) aussendet, das eine Verringerung der Dauer eines Antwortfensters ermöglicht, wenn eine Kollision zwischen mehreren Antwortfenstern (REPᵢ) in diesem Antwortfenster erfaßt wird.

12. Transponder (TR), der Kommunikationsmittel (300, 306), Verarbeitungs- und Steuermittel (302), Speichermittel (304) sowie Mittel umfaßt, die auf den Empfang eines von einer Leseeinheit (20) ausgehenden Abfragesignals (INT) antworten und ermöglichen, ein Antwortfenster aus der Gesamtheit von Antwortfenstern (SLOTₖ, k = 1 bis n), in dem dieser Transponder ein Antwortsignal (REP) aussendet, auszuwählen, wobei dieser Transponder so beschaffen ist, daß er bei Empfang eines Sperrsignals (MUTE) seine Aktivität zumindest vorübergehend unterbricht, wobei dieser Transponder **dadurch gekennzeichnet ist, daß** er außerdem so beschaffen ist, daß er bei Empfang eines Fenster-Sprungsignals (SHIFT), das von der Leseeinheit (20) ausgeht, zu einem folgenden Antwortfenster übergeht, wobei dieses Fenster-Sprungsignal (SHIFT) angibt, daß ein Antwortfenster nicht verwendet wird.

13. Transponder (TR) nach Anspruch 12, **dadurch gekennzeichnet, daß** er außerdem so beschaffen ist, daß er das Aussenden des Antwortsignals (REP) bei Empfang des Fenster-Sprungsignals (SHIFT) unterbricht, wobei das Fenster-Sprungsignal (SHIFT) angibt, daß das Antwortsignal (REP) mit einer Kollision mit einem von einem anderen Transponder ausgehenden Antwortsignal eingegeben wird.

14. Transponder (TR) nach Anspruch 12, **dadurch gekennzeichnet, daß** die Mittel zum Auswählen eines Antwortfensters Mittel zum zufälligen Auswählen umfassen, die bei jedem neuen Abfragesignal (INT) in zufälliger Weise ein beliebiges Antwortfenster in der Gesamtheit von Antwortfenstern (SLOTₖ, k = 1 bis n) bestimmen.
